# FASCICULE DE BREVET EUROPEEN

(11) **EP 0 455 524 B1**
(45) Date de publication et mention de la délivrance du brevet: **28.06.1995**
(21) Numéro de dépôt: 91400864.4
(22) Date de dépôt: 29.03.1991
(51) Int. Cl.: B60R 1/00, B60Q 1/00

(54) **Système d'éclairage et de visualisation pour véhicules**
Beleuchtungs- und Anzeigesystem für Fahrzeuge
Illumination and display system for vehicles

(30) Priorité: 02.04.1990 FR 9004195
(43) Date de publication de la demande: 06.11.1991
(73) Titulaire: REGIE NATIONALE DES USINES RENAULT S.A., 92109 Boulogne Billancourt (FR)
(72) Inventeur: Nguyen, Hoang Giang, F-91130 Ris-Orangis (FR)
(74) Mandataire: Ernst-Schonberg, Michel

(56) Documents cités:
- AU-B- 1 175 470
- DE-A- 3 342 898
- FR-A- 1 206 561
- REVUE AUTOMOBILE. vol. 82, no. 51, 18 décembre 1987, BERNE, CH page 17, E. BEHRENDT: "Les infrarouges au service de la sécurité"
- AUTOMOTIVE ENGINEERING. vol. 97, no. 8, août 1989, WARRENDALE, US pages 52 - 56; "Prometheus"
- PATENT ABSTRACTS OF JAPAN vol. 12, no. 1 (M-656) 06 janvier 1988, & JP-A-62 166135 (FUJI ELECTRIC) 22 juillet 1987,

## Description

La présente invention concerne un système d'éclairage et de visualisation pour véhicules permettant la vision de conducteurs de véhicules, en particulier de véhicules automobiles.

Des systèmes classiques de ce genre sont constitués par une associaton de feux, par exemple des phares, des feux de croisement, des feux de position et des feux de stop, montés sur la carrosserie du véhicule. Lesdits feux émettent sans exception des faisceaux lumineux dans le spectre visible.

De nuit, dans la plupart des cas, le conducteur doit se contenter des feux de croisement conventionnels de son véhicule pour ne pas éblouir d'autres usagers de la route avec les phares du véhicule. De ce fait, il ne peut voir plus loin que la distance d'éclairage des faisceaux lumineux émis par les feux de croisement sur la route, ladite distance d'éclairage étant en général inférieure à 50 m. En conséquence, le conducteur du véhicule, s'il veut respecter les consignes de sécurité de la route, doit limiter la vitesse de son véhicule de façon à l'adapter à la distance d'éclairage des feux de croisement de celui-ci. En effet, si la vitesse du véhicule dépasse une certaine limite fixée par la dite distance d'éclairage, le conducteur aura du mal à contrôler son véhicule pour éviter éventuellement un obstacle sur la chaussée de la route et qui entre dans le champ de vision du conducteur trop tardivement pour lui permettre de réagir à temps.

Le même problème de visibilité et d'obstacles sur la route peuvent se poser également de jour. En effet, pendant les périodes de lever du soleil ou du coucher du soleil, les rayons solaires sont trop peu inclinés par rapport à la chaussée de la route, si bien que le conducteur du véhicule circulant face au soleil peut être ébloui par les rayons solaires qui perturbent sa vision de la route.

Dans une autre situation ou des ombres sont projetées par le soleil sur la chaussée à cause d'arbres, de bâtiments, de ponts ou autres se trouvant sur les bords de la route, il est quelquefois difficile pour le conducteur d'identifier à distance un obstacle située dans une ombre sur la chaussée pour pouvoir l'éviter à temps.

Le brevet allemand (DE-A-3342898) décrit un appareil de vision par temps de brouillard pour véhicules selon la préambule de la revendication 1. L'appareil comprend un ou plusieurs projecteurs de rayons infrarouges dont la longueur d'onde est supérieure à 10 »m, et un dispositif d'images thermiques permettant de capter les rayons infrarouges émis par le(s) projecteurs(s) et ou réfléchis par les objets pour reconstituer l'image sur la vitre avant du véhicule. Le problème technique posé par le brevet est d'augmenter la distance de vision du conducteur par temps de brouillard.

Le brevet australien (AU-B-11754/70) décrit une combinaison des phares et du pare-brise pour un véhicule routier afin d'éviter que le conducteur soit ébloui par les véhicules venant d'en face. A cet effet, chaque phare de devant est équipé d'un filtre de polarisation ; le pare-brise est également équipé d'un filtre de polarisation de façon à permettre au conducteur de voir à travers le filtre du pare-brise qui est transparent à la lumière des projecteurs du véhicule, mais opaque pour la lumière des phares de véhicule venant dans le sens opposé.

La présente invention a pour objet de résoudre les problèmes posés cidessus en réalisant un système approprié permettant d'améliorer la vision de nuit et de jour du conducteur de véhicules.

Le système d'éclairage et de visualisation, pour véhicules équipés d'au moins un feu avant, au moins un feu arrière de position et au moins un feu arrière de stop, ces feux émettant des faisceaux lumineux dans le spectre visible, comprenant
- au moins un projecteur avant émettant un faisceau lumineux dans le spectre proche infrarouge;
- au moins une caméra sensible dans le spectre proche infrarouge, orientée vers l'avant du véhicule et comprenant un filtre infrarouge combiné avec un polariseur montés devant l'objectif de la caméra; et
- un ensemble de traitement et de visualisation relié à la caméra pour permettre au conducteur d'observer l'image du champ visualisé par la caméra; est caratérisé en ce que la portée du ou des projecteurs avant avant éméttant un faisceau lumineux dans le spectre proche infrarouge est supérieur à au moins deux fois la portée du ou des feux avant éméttant un faisceau lumineux dans le spectre visible, et en ce que le ou les projecteurs avant éméttant un faisceau lumineux dans le spectre proche infrarouge, les feux arrière de position et de stop comprennent des polarisateurs infrarouges, l'orientation de polarisation de chacun desdits polariseurs étant disposée perpendiculairement à celle du polariseur de la caméra, de façon à ce que la caméra ne détecte que des rayons lumineux proches infrarouges suivant une polarisation déterminée dans son champ de vision.

Toutefois aucun des documents précités ne propose de solution technique satisfaisant aux problèmes pasés ci-dessus.

De préférence, le feu avant émet un faisceau lumineux de courte portée dont le spectre est limité de préférence entre 0,4»m et 0,7»m. Le projecteur avant émet un faisceau lumineux de longue portée dont le spectre est limité de préférence entre 0,75»m et 1,2»m. Le spectre auquel la caméra est sensible est avantageusement limité de façon identique à celui du projecteur avant, c'est-à-dire entre 0,75»m et 1,2»m.

De cette façon, la caméra est totalement insensible aux faisceaux lumineux des feux avant et des projecteurs avant des véhicules venant en sens inverse, car les uns sont en dehors du spectre de la caméra et les autres sont polarisés perpendiculairement à la polarisation du polariseur de la caméra. Il en est de même pour des feux arrière de position et de stop qui émettent de la lumière polarisée perpendiculairement à la polarisation du polariseur de la caméra.

En revanche, la caméra est sensible à la lumière réfléchie par la chaussée provenant du faisceau lumineux infrarouge du projecteur avant, de façon similaire à la visualisation directe, par le conducteur, de la chaussée éclairée par les phares du véhicule selon les systèmes classiques. L'ensemble de traitement et de visualisation restitue l'image du champ visualisé par la caméra, par exemple sur un écran à proximité du conducteur.

L'invention sera mieux comprise à l'étude de la description détaillée d'un mode de réalisation de l'invention pris à titre d'exemple nullement limitatif et illustré par des dessins annexés, sur lesquels :
la figure 1 est une vue schématique d'un véhicule automobile équipé d'un système d'éclairage et de visualisation selon l'invention;
la figure 2 est une représentation schématique de l'image restituée par l'ensemble de traitement et de visualisation relié à la caméra;
la figure 3 est une vue éclatée schématisant la structure d'un projecteur avant et du feu avant selon l'invention;
la figure 4 est une vue éclatée schématisant la structure de l'ensemble formant caméra selon l'invention;
la figure 5 est une vue partielle en coupe d'un polariseur infrarouge selon l'invention; et
la figure 6 est une coupe axiale d'un second polariseur infrarouge selon l'invention.

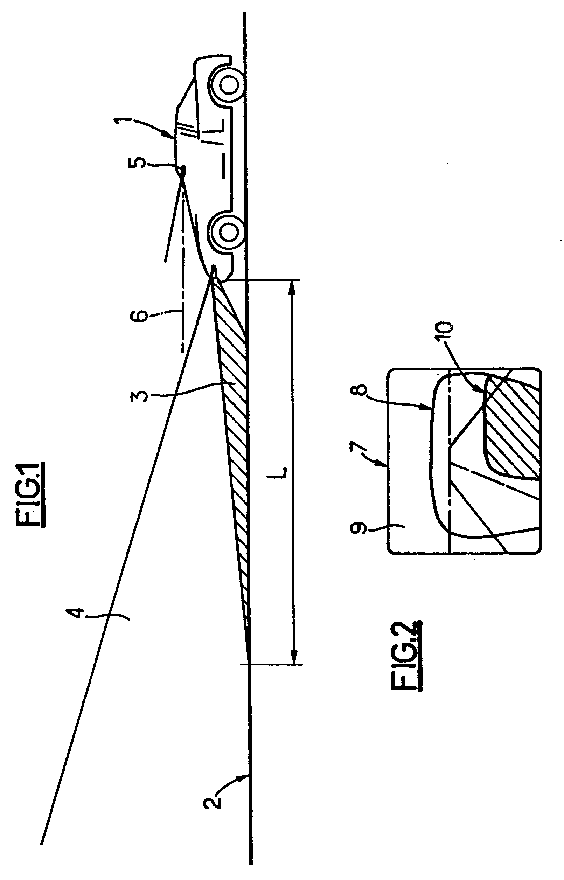

Comme illustré sur la figure 1, le véhicule automobile 1, équipé d'un système d'éclairage de visualisation selon l'invention, circule sur la chaussée 2 d'une route. La zone hachurée 3 représente les faisceaux lumineux dans le spectre visible émis par le ou les feux avant et dont la portée L est inférieure ou égale à la portée des feux de croisement conventionnels. La zone 4 représente les faisceaux lumineux dans le spectre proche infrarouge émis par le ou les projecteurs avant du véhicule 1. La portée des faisceaux 4 est au moins trois fois supérieure à la portée L des faisceaux 3 dans le spectre visible.

Au-dessus du tableau de bord du véhicule 1 est installé une caméra 5 dirigée vers l'avant du véhicule avec son axe optique 6 sensiblement horizontal. Comme montré sur la figure 2, l'image restituée 7 par un ensemble de traitement et de visualisation relié à la caméra 5 permet au conducteur d'observer le champ visualisé par la caméra 5. Sur l'image 7, on distingue schématiquement une zone 8 éclairée par les faisceaux 4 du ou des projecteurs avant dans le spectre proche infrarouge et une zone 9 non éclairée par les faisceaux 4. Une zone 10 représentée sur la figure 2 correspondant à l'éclairage des faisceaux 3 du ou des feux avant, est en effet pratiquement inexistente sur l'image 7, car la caméra 5 est insensible au spectre visible des faisceaux 3, la zone 10 permettant simplement de montrer la différence de portée des faisceaux lumineux 3 et 4.

Grâce à la caméra 5, le conducteur peut voir aussi loin que la distance d'éclairage des faisceaux proches infrarouges 4 sur la chaussée 2. Il en résulte que dans la conception des feux avant, la portée L des faisceaux 3 dans le spectre visible peut être réduite et orientée de façon à ne pas éblouir des usagers de véhicules venant dans le sens inverse.

De jour, lorsque les problèmes de visibilité ou d'ombres sur la chaussée dues au soleil se posent, le conducteur peut allumer le ou les projecteurs avant pour éclairer la chaussée par les faisceaux 4 proche infrarouge. L'ensemble de traitement et de visualisation relié à la caméra 5 permet de restituer l'image 7 du champ visualisé par la caméra 5. Le problème de visibilité est ainsi résolu pour le conducteur. Il est important de signaler que les faisceaux 4 proches infrarouges ne sont pas visibles à l'oeil nu par les usagers de la route qui ne sont pas, par conséquent, gênés par lesdits faisceaux 4.

La figure 3 représente un projecteur avant 11 proche infrarouge associé à un feu avant 12 visible pour former un projecteur mixte de faisceaux lumineux dans les spectres proche infrarouge et visible respectivement. Le projecteur mixte peut comporter un boîtier commun séparé en un compartiment proche infrarouge 13 et un compartiment visible 14.

Le projecteur avant 11, logé dans le compartiment proche infrarouge 13 comprend une source lumineuse 15, un filtre infrarouge 16 et un polariseur infrarouge 17. La source lumineuse 15 peut être constituée d'une lampe à filament à large spectre, par exemple du type H₂ ou H₄ vendue dans le commerce d'automobile. Le plan d'onde du faisceau émis par la lampe 15 est représenté schématiquement par 18, immatériel, dans le but de faciliter l'explication du fonctionnement du projecteur avant 11.

On peut constater sur le plan d'onde 18 que la lumière émise par la lampe 15 ne comporte pas de polarisation préférentielle, les vecteurs de polarisation étant orientés de manière aléatoire. Autrement dit, le faisceau lumineux large spectre émis par la lampe 15 n'est pas polarisé.

Le filtre infrarouge 16 ne laisse traverser qu'une partie du faisceau lumineux dont la longueur d'onde est supérieure à un seuil déterminé, par exemple au-dessus de 0,75»m. Ainsi, le faisceau lumineux traversant le filtre infrarouge 16 se situe dans le spectre proche infrarouge. Le filtre infrarouge 16 est associé au polariseur infrarouge 17 dont la fonction est de ne laisser passer qu'un partie du faisceau lumineux ayant une polarisation déterminée. En d'autres termes, le faisceau lumineux traversant le polariseur 17 est un faisceau polarisé comme représenté sur le plan d'onde 19 avec un vecteur de polarisation horizontal.

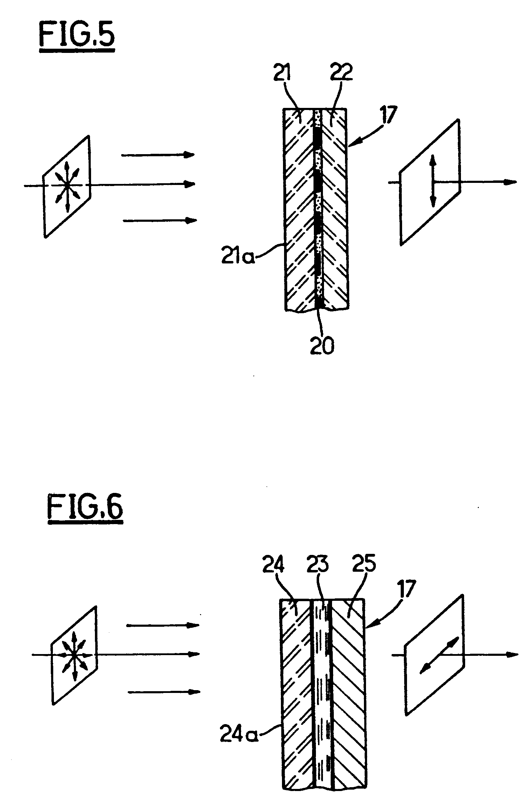

Les figures 5 et 6 montrent respectivement deux types de polariseur 17. La figure 5 illustre un polariseur à grille constitué par une grille 20 formée de bandes métalliques parallèles et prises en sandwich entre deux couches de verre de silice 21, 22, la distance entre les bandes métalliques étant de l'ordre de quelques longueurs d'onde proches infrarouges. La lumière non polarisée traversant le filtre infrarouge 16 arrive du côté 21a du polariseur 17. La lumière sortant du polariseur 17 est polarisée selon une polarisation perpendiculaire aux bandes métalliques formant la grille 20.

La figure 6 montre un polariseur dichroïque 17 constitué par un film dichroïque 23 pris en sandwich entre une couche de verre réfléchissant la chaleur 24 et une couche de verre de silice 25. La lumière non polarisée incidente arrive du côté 24a de la couche de verre réfléchissant la chaleur 24. La lumière sortant du polariseur 17 est polarisée selon une direction perpendiculaire à celle des orientations microscopiques de cristaux dans les polymères du film dichroïque 23.

Le projecteur avant 11 peut donc émettre un faisceau lumineux dans le spectre proche infrarouge et polarisé selon une polarisation déterminée.

La structure du feu avant 12 montée dans le compartiment visible 14 est beaucoup plus simple. Le feu avant 12 comprend une source lumineuse 26 qui peut être une lampe à filament large spectre identique à la lampe 15. Le plan d'onde 27 du faisceau lumineux émis par la lampe 26 contient des vecteurs de polarisation orientés de façon aléatoire comme sur le plan d'onde 18 pour la lampe 15. On dispose un filtre passe-bande 28 ou un filtre réfléchissant la chaleur devant la lampe 26 pour ne laisser passer qu'un spectre étroit de lumière visible. On peut choisir par exemple comme caractéristique une bande passante comprise entre 0,4»m et 0,7»m pour le filtre passe-bande 28. Ainsi, le feu avant émet un faisceau lumineux visible dont le spectre est en dehors du spectre proche infrarouge du projecteur avant 11.

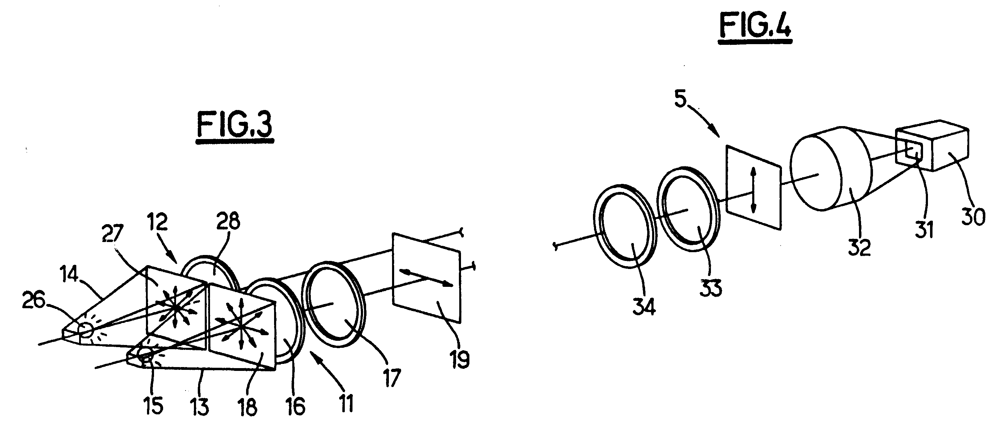

La figure 4 représente une vue éclatée de la caméra 5 proche infrarouge. La caméra 5 comprend un boîtier 30, un senseur 31, un objectif 32, un polariseur infrarouge 33 et un filtre infrarouge 34. Le filtre infrarouge 34 peut être de caractéristique identique au filtre infrarouge 16 du projecteur avant 11. Le polariseur infrarouge 33 peut être de structure identique à celle du polariseur infrarouge 17 du projecteur avant 11. La lumière traversant le filtre 34 et le polariseur 33 est polarisée et se situe dans un spectre proche infrarouge. Cette lumière polarisée arrive sur l'objectif 32 qui projette une image sur le senseur 31, ladite image étant traitée par un ensemble de traitement et de visualisation relié au boîtier 30.

Afin d'éviter que la caméra 5 soit éblouie par les projecteurs avant 11 d'un véhicule venant d'en face, il est nécessaire que la polarisation de la lumière reçue par la caméra soit perpendiculaire à la polarisation du faisceau lumineux émis par le projecteur avant 11. De même, pour des feux arrière de position et de stop des véhicules, il est préférable d'équiper ces feux par un polariseur du type polariseur 17 du projecteur 11, afin de polariser la lumière émise par lesdits feux perpendiculairement à la polarisation de la lumière perçue par la caméra 5. Ainsi, la caméra ne sera pas éblouie par les feux arrière d'un véhicule circulant devant et dans le même sens.

Il est également possible d'équiper le véhicule avec en plus un projecteur arrière proche infrarouge et une caméra sensible dans le spectre proche infrarouge comme décrit précédemment pour permettre le conducteur de voir sur un écran associé l'image du champ visualisé par la caméra arrière.

Le système d'éclairage et de visualisation de l'invention peut être appliqué à tout genre de véhicules, notamment pour véhicules à deux roues ou à quatre roues, par exemple des motocyclettes ou des véhicules automobiles.

## Revendications

1. Système d'éclairage et de visualisation pour véhicules équipés d'au moins un feu avant (12), au moins un feu arrière de position et au moins un feu arrière de stop, ces feux émettant des faisceaux lumineux dans le spectre visible, comprenant :
- au moins un projecteur avant (11) émettant un faisceau lumineux dans le spectre proche infrarouge;
- au moins une caméra (5) sensible dans le spectre proche infrarouge, orientée vers l'avant du véhicule (1) et comprenant un filtre infrarouge (34) combiné avec un polariseur (33) montés devant l'objectif (32) de la caméra; et
- un ensemble de traitement et de visualisation relié à la caméra pour permettre au conducteur d'observer l'image (7) du champ visualisé par la caméra;
caractérisé en ce que
la portée du ou des projecteurs avant (11) est supérieure à au moins deux fois la portée du ou des feux avant, (12) et en ce que le ou les projecteurs avant (11), les feux arrière de position et de stop, comprennent des polarisateurs infrarouges, l'orientation de polarisation de chacun desdits polariseurs étant disposée perpendiculairement à celle du polariseur (33) de la caméra, de façon à ce que la caméra (5) ne détecte que des rayons lumineux proches infrarouges suivant une polarisation déterminée dans son champ de vision.

2. Système selon la revendication 1, caractérisé par le fait que le projecteur avant (11) comprend une lampe à filament (15) large spectre, un filtre infrarouge (16), et un polariseur (17), le faisceau lumineux émis par le projecteur avant étant dans le spectre proche infrarouge est polarisé selon une polarisation déterminée.

3. Système selon la revendication 1 ou 2, caractérisé par le fait que le feu avant (12) comprend une lampe à filament (26) large spectre et un filtre passe-bande (28) ou un filtre réfléchissant la chaleur pour n'émettre qu'un faisceau lumineux dans le spectre visible.

4. Système selon l'une des revendications précédentes, caractérisé par le fait que la caméra (5) est sensible à un faisceau lumineux polarisé dans un spectre compris entre 0,75»m et 1,2»m.

5. Systèm selon l'une quelconque des revendications précédentes, caractérisé par le fait que le projecteur avant (11) émet un faisceau lumineux polarisé dans le spectre compris entre 0,75»m et 1,2»m.

6. Système selon l'une quelconque des revendications précédentes, caractérisé par le fait que le feu avant (12) émet un faisceau lumineux non polarisé dans le spectre compris entre 0,4»m et 0,7»m.

7. Système selon l'une quelconque des revendications précédentes, caractérisé par le fait que le projecteur avant (11) et le feu avant (12) sont montés respectivement dans deux compartiments adjacents d'un boîtier pour former un projecteur mixte.

8. Système selon l'une quelconque des revendications précédentes, caractérisé par le fait qu'il comprend en outre un projecteur arrière proche infrarouge identique au projecteur avant (11), et une caméra arrière sensible dans le spectre proche infrarouge identique à la caméra avant (5).

## Claims

1. Illumination and display system for vehicles fitted with at least one headlight (12), at least one rear indicator light and at least one rear brake light, said lights emitting light beams within the visible spectrum, comprising:
- at least one front lamp (11) emitting a light beam in the near infrared spectrum;
- at least one camera (5) sensitive within the near infrared spectrum, oriented towards the front of the vehicle (1) and comprising an infrared filter (34) combined with a polariser (33) and mounted in front of the camera lens (32); and
- a processing and display unit linked to the camera in order to allow the driver to observe the image (7) of the field made visible by the camera;
characterised in that the range of the front lamp or lamps (11) is at least twice as great as the range of the headlight or headlights (12), and in that the front lamp or lamps (11) and the rear indicator and brake lights comprise infrared polarisers, the orientation of polarisation of each of said polarisers being disposed perpendicularly to that of the polariser (33) of the camera, such that the camera (5) only detects near infrared light rays after specific polarisation in its field of vision.

2. System according to claim 1, characterised by the fact that the front lamp (11) comprises a wide spectrum filament lamp (15), an infrared filter (16) and a polariser (17), the light beam emitted by the front lamp being in the near infrared spectrum and polarised according to a specific polarisation.

3. System according to claim 1 or 2, characterised by the fact that the headlight (12) comprises a wide spectrum filament lamp (26) and a band-pass filter (28) or a heat reflecting filter so that it only emits a light beam within the visible spectrum.

4. System according to one of the preceding claims, characterised by the fact that the camera (5) is sensitive to a polarised light beam in a spectrum between 0.75 »m and 1.2»m.

5. System according to any one of the preceding claims, characterised by the fact that the front lamp (11) emits a polarised light beam in the spectrum between 0.75»m and 1.2»m.

6. System according to any one of the preceding claims, characterised by the fact that the headlight (12) emits a non-polarised light beam in the spectrum between 0.4»m and 0.7»m.

7. System according to any one of the preceding claims, characterised by the fact that the front lamp (11) and the headlight (12) are respectively mounted in two adjacent compartments of a housing to form a combined lamp.

8. System according to any one of the preceding claims, characterised by the fact that it furthermore comprises a rear near infrared lamp identical to the front lamp (11) and a rear camera sensitive within the near infrared spectrum identical to the front camera (5).

## Patentansprüche

1. Beleuchtungs- und Anzeigesystem für Fahrzeuge, die mit wenigstens einem Vorderlicht (12), mit wenigstens einem Rücklicht und mit wenigstens einem Bremslicht versehen sind, wobei diese Lichter Lichtbündel im sichtbaren Spektrum aussenden, mit:
- wenigstens einem vorderen Projektor (11), der ein Lichtbündel im nahen Infrarot-Spektrum aussendet;
- wenigstens einer Kamera (5), die für das nahe Infrarot-Spektrum empfindlich ist, die zum Vorderteil des Fahrzeugs (1) ausgerichtet ist und die ein Infrarot-Filter (34) aufweist, das zusammen mit einem Polarisator (33) vor dem Objektiv (32) der Kamera angeordnet ist und
- einer Verarbeitungs- und Anzeigeanordnung, die mit der Kamera verbunden ist, um es dem Fahrer zu ermöglichen, das Bild (7) des durch die Kamera erfaßten Gebiets zu betrachten,
**dadurch gekennzeichnet**, daß die Reichweite des oder der vorderen Projektoren (11) mehr als doppelt so groß ist wie die Reichweite des oder der Vorderlichter (12), und daß der oder die vorderen Projektoren (11), die Rücklichter und die Bremslichter Infrarot-Polarisatoren aufweisen, wobei die Polarisationsrichtung eines jeden Polarisators senkrecht zu derjenigen des Polarisators (33) der Kamera ausgerichtet ist, dergestalt, daß die Kamera (5) nur Lichtstrahlung im nahen Infrarot gemäß einer in ihrem Gesichtsfeld festgelegten Polarisationsrichtung erkennt.

2. System nach Anspruch 1, **dadurch gekennzeichnet**, daß der vordere Projektor (11) eine Glühlampe (15) mit breitem Spektrum aufweist, ein Infrarot-Filter (16) und einen Polarisator (17), wobei das vom vorderen Projektor ausgesandte Lichtbündel, das im nahen Infrarot-Spektrum liegt, in einer vorgegebenen Polarisationsrichtung polarisiert ist.

3. System nach Anspruch 1 oder 2, **dadurch gekennzeichnet**, daß das Vorderlicht (12) eine Glühlampe (26) mit breitem Spektrum aufweist sowie ein Bandpaßfilter (28) oder ein die Wärme reflektierendes Filter, um ein Lichtbündel im sichtbaren Spektralbereich auszusenden.

4. System nach einem der vorhergehenden Ansprüche, **dadurch gekennzeichnet**, daß die Kamera (5) empfindlich ist für ein polarisiertes Lichtbündel im Spektralbereich zwischen 0,75 »m und 1,2 »m.

5. System nach einem der vorhergehenden Ansprüche, **dadurch gekennzeichnet**, daß der vordere Projektor (11) ein polarisiertes Lichtbündel im Spektralbereich zwischen 0,75 »m und 1,2 »m aussendet.

6. System nach einem der vorhergehenden Ansprüche, **dadurch gekennzeichnet**, daß das Vorderlicht (12) ein nichtpolarisiertes Lichtbündel im Spektralbereich zwischen 0,4 »m und 0,7 »m aussendet.

7. System nach einem der vorhergehenden Ansprüche, **dadurch gekennzeichnet**, daß der vordere Projektor (11) und das Vorderlicht (12) in zwei benachbarten Fächern eines Gehäuses angeordnet sind, um so einen zusammengesetzten Scheinwerfer zu bilden.

8. System nach einem der vorhergehenden Ansprüche, **dadurch gekennzeichnet**, daß es zusätzlich einen rückwärtigen Projektor für den nahen Infrarotbereich aufweist, der identisch zum vorderen Projektor (11) ist sowie eine rückwärtige Kamera, welche für das nahe Infrarot-Spektrum empfindlich ist und die identisch zur vorderen Kamera (5) ist.
